# NEW EUROPEAN PATENT SPECIFICATION

(11) **EP 0 736 850 B2**
(45) Date of publication and mention of the opposition decision: **30.07.2003**
(45) Mention of the grant of the patent: 22.03.2000
(21) Application number: 96200965.0
(22) Date of filing: 04.04.1996
(51) Int. Cl.: G08B 13/24

(54) **Method for preventing shoplifting and electronic theft detection system**
Verfahren zum Verhindern von Ladendiebstahl und elektronisches Diebstahl-Detektierungssystem
Procédé pour prévenir le vol à l'étalage et système de détection électronique de vol

(30) Priority: 05.04.1995 NL 1000069
(43) Date of publication of application: 09.10.1996
(73) Proprietor: N.V. Nederlandsche Apparatenfabriek NEDAP, NL-7141 DE Groenlo (NL)
(72) Inventor: Rebers,Paulus, 7521 BM Enschede (NL)
(74) Representative: Smulders, Theodorus A.H.J., Ir.

(56) References cited:
- EP-A- 0 435 198
- DE-A- 3 811 912
- US-A- 4 998 094
- PROCEEDINGS OF 1981 CARNAHAN CONFERENCE ON CRIME COUNTERMEASURES, 15 May 1981, LEXINGTON, KENTUCKY, pages 173-176, XP002007177 W. J. POLLARD: "LUGGAGE, PARCEL & PERSONNEL SCREENING IN THE 80 S"
- Wirsching : "Die unheimlichen Aufpasser", Warensicherungssysteme gegen Ladendiebstahl, Sicherheit im Handel, Band I, Peter Hohl Verlag, 1985, S. 398-424

## Description

The invention relates to a method for preventing shoplifting, and to an electronic theft detection system, sometimes referred to as anti-theft system, comprising a number of electronic labels which in operation are attached to goods to be protected, and means for generating an electromagnetic interrogation field in at least one detection zone and for detecting and signalling the presence of an electronic label in the detection zone.

The known anti-theft systems normally comprise one or more pillars which are provided with means for generating a magnetic field and which form one or more detection zones for electronic labels which for protection are attached to shopware or other articles which may not be brought outside a particular space without consent. Such a system is e.g. known from EP-A-0 435 198.

When an article is being paid for, such a label is removed or deactivated by the (store) personnel. If the article in question has not been paid for and so the label is still present on or in the article, the label is detected as the antitheft pillars are being passed and thereupon the personnel of, for instance, the store is alerted.

A drawback of the known theft detection systems is that it is possible to screen the electronic labels with the aid of a metal envelope, in such a manner that the electromagnetic field which forms an interrogation signal generated by a transmitter circuit of the system does not reach the labels, or that the reply signal generated by a label cannot be observed by a receiver device of the system.

It has been found that in practice protected articles can be stolen from spaces in the above-described manner, without a signalling by the anti-theft system taking place.

In US 4 998 094 it is proposed to provide each label of the anti-theft system with a metal detector device for detecting high frequency shielding of the label, which metal detector activates the alarm of the system. A disadvantage of this system is that it is relatively expensive to provide each label with a metal detector device.

The object of the invention is to obviate this drawback and generally to provide an efficient and reliably operating electronic anti-theft detection system and a reliable method for preventing shoplifting.

According to the invention, a theft detection system is provided with the features of claim 1 and a method for preventing shoplifting is provided with the features of claim 9.

In the following, the invention will be further described with reference to the accompanying drawings.
Fig. 1 schematically shows an example of an anti-shoplifting system according to the known state of the art; and
Fig. 2 schematically shows an exemplary embodiment of a system according to the invention.

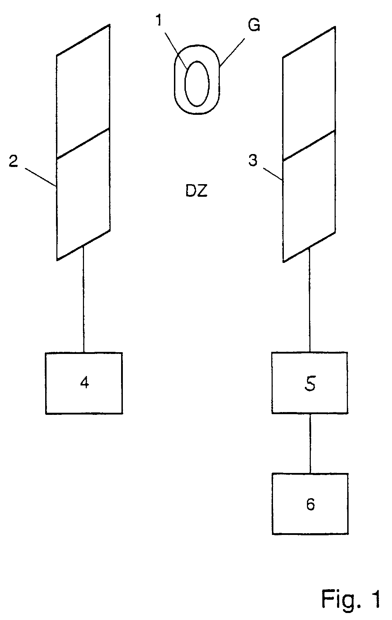

Fig. 1 schematically shows a known theft detection system. The goods to be protected, which are schematically indicated by G, are provided with a label with a tuned circuit 1. Such labels are known per se and can for instance be provided with a tuned circuit comprising a coil and a capacitor. Adjacent the exit(s) of the store or other space, in operation an interrogation field is generated by at least one antenna 2 by means of a transmitter device 4 for forming a detection zone DZ. If in the interrogation field a label with a tuned circuit 1 is disposed, it responds to the interrogation field by generating a signal which is received by the antenna 3 of a receiver device 5. The received signals are processed by a processor with alarm device 6.

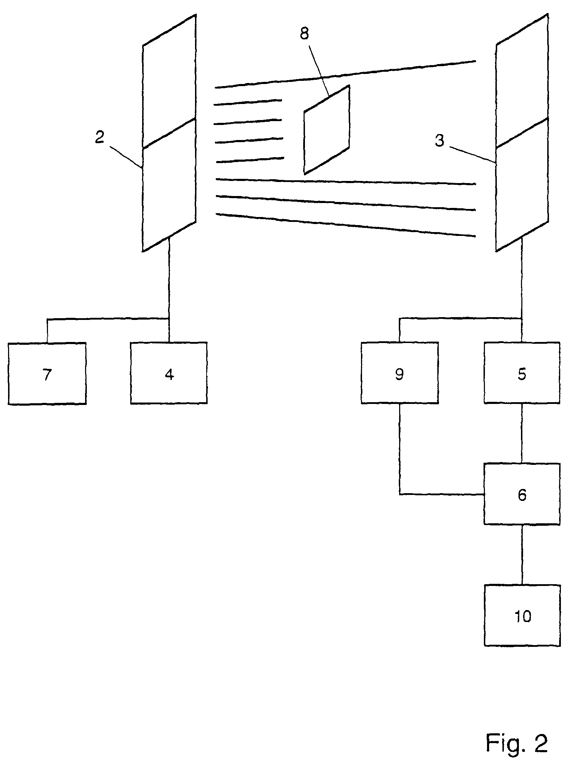

Fig. 2 schematically shows an example of a device according to the invention. The system of Fig. 2 differs from that of Fig. 1 in that there is coupled to antenna 2 and antenna 3 a metal detector device comprising a transmitter 7 and a receiver 9, which operates at one or more frequencies without influencing the detection via transmitter 4 and receiver 5. Via antenna 2, the transmitter device 7 radiates a field at an optimum frequency for metal. If a metal object with a surface 8 enters the field, it will disturb the field, the extent of disturbance increasing with the magnitude of the surface. Metal detector devices are known per se, for instance from Proceedings of 1981 Carnahan Conference on Crime Counter-Measures, 15 may 1981, pp. 173-176.

If the transmitting and receiving antenna are spatially separated, just as in the theft detection system shown, the detected disturbance is independent of the distance to the pillars and gives a measure for the surface of the metal object. This is in contrast with conventional metal detectors such as used, for instance, at airports or for the purpose of searching for coins, where the distance to the combined transmitting and receiving antenna is determinative of the sensitivity.

Via antenna 3 the receiver 9 detects this disturbance, which is then passed on to processor 6. This processor thereupon generates an alarm signal preferably susceptible of wireless remote reception by a receiver 10, for instance a vibrating alarm or bleeper. The receiver 10 may or may not be provided with a display which displays, for instance, the pillar passageway where the metal has been detected.

The alarm signal generated by the processor is preferably a silent alarm signal because a considerable number of metal objects are conceivable that will cause an alarm without involving an attempt to steal anything. Examples include wheelchairs, perambulators, etc.

On the ground of this signal, the person receiving this signal can take appropriate measures to frustrate the theft or to ensure identification of the thief, with or without using aids such as video cameras.

The system according to the invention also provides the advantage that already at the time when a person who, for instance, carries a bag coated with a metal casing or, more simply, coated with aluminium foil, enters the store via a detection zone, this can be observed, so that the personnel can observe this person during his/her progress through the store.

It is observed that in the exemplary embodiment shown in Fig. 2 the metal detector makes use of the antenna system of the theft detection system proper. In principle, it is even possible for the electromagnetic field intended for label detection to be used also for the detection of metal objects, while, if desired, extra frequencies can be added. The responses caused by a label and by a metal object are easy to distinguish from each other by the use of known techniques inasmuch as a label contains a tuned circuit, which only provides a response in a narrow-band frequency range, while, conversely, a metal object gives rise to a wide-band reaction. When using a detection field with sweeping frequency and/or a field with extra added frequency components, a label will therefore give rise to a response signal arising only at a particular narrow frequency range, whereas a metal object leads to a reaction extending over all frequencies.

On the other hand, it is also possible to add the metal detection system as a separate complete system to an already existing label detection system, so that in fact two independently operating systems are involved. Of course, intermediate solutions are possible between this last possibility and an embodiment where the two systems are integrated as far as possible and utilize the same components as much as possible. Thus, for instance, only the antennas could be shared.

In the foregoing, the starting point has been a label detection system of the transmission type, in which the labels themselves radiate a signal in response to an interrogating electromagnetic field. The signal is then received by a separate receiving antenna, as in Fig. 1 and/or by a transmitting antenna also functioning as receiving antenna. However, the invention can also be applied in combination with a so-called absorption system, in which the absorption of energy from the interrogation field, which occurs if an electronic label is disposed in the field, is detected on the transmitting side. In all cases, per detection zone one or more antennas, which may or may not be combined for transmission and reception, can be used.

It is observed that the above mentioned transmission systems and absorption systems are already known per se and therefore have not been described in detail.

It is further observed that in the drawings 8-shaped antennas are shown, but that antennas with a single loop or with more than two loops, whether or not in combination with 8-shaped antennas, can be used. These and similar modifications are obvious to those skilled in the art.

## Claims

1. An electronic theft detection system comprising a plurality of electronic labels which in operation are attached to goods to be protected, and means (2-5) for generating an electromagnetic interrogation field in at least one detection zone and for detecting and signalling the presence of an electronic label in the at least one detection zone,
wherein the system further comprises a stationary metal detector device (7, 9) which is arranged to detect the presence of a metal object (8) in the at least one detection zone, wherein the metal detector device activates an alarm device (6) upon detection of a metal object.

2. An electronic theft detection system according to claim 1, **characterized in that** the metal detector device makes at least partly use of the electromagnetic interrogation field generated by the theft detection system.

3. An electronic theft detection system according to claim 1, **characterized in that** the metal detector device for detecting metal objects in the at least one detection zone makes at least partly use of one or several antenna(s) (2,3) of the electronic theft detection system.

4. An electronic theft detection system according to any one of the preceding claims, **characterized in that** the metal detector device makes at least partly use of the means (2,4) for generating an electromagnetic interrogation field and/or the means (3,5) for detecting and signalling an electronic label.

5. An electronic theft detection system according to any one of the preceding claims, **characterized in that** the alarm device provides a silent alarm, which can only be observed by authorized persons.

6. An electronic theft detection system according to any one of the preceding claims, **characterized in that** the at least one detection zone is bounded on opposite sides by antennas (2,3) which in operation generate the interrogation field and receive a signal from an electronic label.

7. An electronic theft detection system according to claim 6, **characterized in that** the antennas are mounted in a pillar-shaped construction on opposite sides of the at least one detection zone.

8. An electronic theft detection system according to any one of claims 1-7, **characterized in that** the alarm device comprises a wirelessly activatable portable alarm device.

9. A method for preventing shoplifting, in which goods present in a store or similar space are provided with electronic labels which can be detected by means of an electromagnetic interrogation field, and in which adjacent an entrance/exit of the space at least one detection zone is formed where an electromagnetic interrogation field is generated, wherein also a stationary metal detector device (7, 9) is provided which is arranged to detect metal objects (8) in the at least one dectection zone, and that upon detection of a metal object (8) in the at least one detection zone an alarm signal is given.

10. A method according to claim 9, **characterized in that** the alarm signal is a silent alarm signal, which can be observed by one or more authorized persons.

11. A method according to claim 9, **characterized in that** upon detection of a metal object in the at least one detection zone and after the alarm signal has been given the persons passing the at least one detection zone at that time are followed and/or checked.

12. A method according to any one of claims 9-11, **characterized in that** for the detection of metal objects at least partly use is made of the means already present for detecting electronic labels.

13. A method according to any one of claims 9-12, **characterized in that** the alarm signal is wirelessly passed on to an alarm device (10).

14. A method according to claim 13, **characterized in that** the alarm device comprises at least one portable alarm device.

## Patentansprüche

1. Elektronisches Diebstahlerkennungssystem mit einer Anzahl elektronischer Markierungen, die im Betrieb an zu schützenden Waren angebracht sind, und Einrichtungen (2-5) zum Erzeugen eines elektromagnetischen Abfragefeldes in wenigstens einer Erkennungszone und zum Erkennen und Anzeigen des Vorhandenseins einer elektronischen Markierung in der wenigstens einen Erkennungszone, wobei das System ferner eine stationäre Metalldetektorvorrichtung (7, 9) aufweist, die zum Erkennen des Vorhandenseins eines metallischen Gegenstandes (8) in der wenigstens einen Erkennungszone angeordnet ist, wobei die Metalldetektorvorrichtung beim Erkennen eines metallischen Gegenstandes eine Alarmvorrichtung (6) aktiviert.

2. Elektronisches Diebstahlerkennungssystem nach Anspruch 1, **dadurch gekennzeichnet, daß** die Metalldetektorvorrichtung wenigstens teilweise das von dem Diebstahlerkennungssystem erzeugte elektromagnetische Abfragefeld nutzt.

3. Elektronisches Diebstahlerkennungssystem nach Anspruch 1, **dadurch gekennzeichnet, daß** die Metalldetektorvorrichtung zum Erkennen von metallischen Gegenständen in der wenigstens einen Erkennungszone wenigstens teilweise eine oder mehrere Antenne(n) (2,3) des elektronischen Diebstahlerkennungssystems nutzt.

4. Elektronisches Diebstahlerkennungssystem nach einem der vorhergehenden Ansprüche, **dadurch gekennzeichnet, daß** die Metalldetektorvorrichtung wenigstens teilweise die Einrichtungen (2,4) zum Erzeugen eines elektromagnetischen Abfragefeldes und/oder die Einrichtungen (3, 5) zum Erkennen und Anzeigen einer elektronischen Markierung nutzt.

5. Elektronisches Diebstahlerkennungssystem nach einem der vorhergehenden Ansprüche, **dadurch gekennzeichnet, daß** die Alarmvorrichtung einen stillen Alarm erzeugt, der nur von autorisierten Personen erkannt werden kann.

6. Elektronisches Diebstahlerkennungssystem nach einem der vorhergehenden Ansprüche, **dadurch gekennzeichnet, daß** die wenigstens eine Erkennungszone auf entgegengesetzten Seiten durch Antennen (2, 3) begrenzt ist, die im Betrieb das Abfragefeld erzeugen und ein Signal von einer elektronischen Markierung empfangen.

7. Elektronisches Diebstahlerkennungssystem nach Anspruch 6, **dadurch gekennzeichnet, daß** die Antennen in einer säulenförmigen Konstruktion auf entgegengesetzten Seiten der wenigstens einen Erkennungszone angebracht sind.

8. Elektronisches Diebstahlerkennungssystem nach einem der Ansprüche 1 - 7, **dadurch gekennzeichnet, daß** die Alarmvorrichtung eine drahtlos aktivierbare tragbare Alarmvorrichtung aufweist.

9. Verfahren zum Verhindern von Ladendiebstahl, bei dem in einem Laden oder einem ähnlichen Raum vorhandene Waren mit elektronischen Markierungen versehene sind, die mittels eines elektromagnetischen Abfragefeldes erkennbar sind, und bei dem nahe einem Eingang/Ausgang des Raumes wenigstens eine Erkennungszone gebildet wird, in der ein elektromagnetisches Abfragefeld erzeugt wird, ebenfalls eine stationäre Metalldetektorvorrichtung (7, 9) vorgesehen ist, die zum Erkennen von metallischen Gegenständen (8) in der wenigstens einen Erkennungszone ausgebildet ist, und beim Erkennen eines metallischen Gegenstandes (8) in der wenigstens einen Erkennungszone ein Alarmsignal ausgegeben wird.

10. Verfahren nach Anspruch 9, **dadurch gekennzeichnet, daß** das Alarmsignal ein stilles Alarmsignal ist, das von einer oder mehreren autorisierten Personen erkannt wird.

11. Verfahren nach Anspruch 9, **dadurch gekennzeichnet, daß** beim Erkennen eines metallischen Gegenstandes in der wenigstens einen Erkennungszone und nach der Ausgabe des Alarmsignals, die Personen, die zu diesem Zeitpunkt die wenigstens eine Erkennungszone passieren, verfolgt und/oder überprüft werden.

12. Verfahren nach einem der Ansprüche 9-11, **dadurch gekennzeichnet, daß** zum Erkennen der metallischen Gegenstände die bereits zum Erkennen elektronischer Markierungen verwendeten Einrichtungen wenigstens teilweise genutzt werden.

13. Verfahren nach einem der Ansprüche 9-12, **dadurch gekennzeichnet, daß** das Alarmsignal drahtlos an eine Alarmvorrichtung (10) geleitet wird.

14. Verfahren nach Anspruch 13, **dadurch gekennzeichnet, daß** die Alarmvorrichtung wenigstens eine tragbare Alarmvorrichtung aufweist.

## Revendications

1. Système de détection de vol électronique comprenant un certain nombre d'étiquettes électroniques qui, en fonctionnement, sont fixées à des marchandises à protéger, et un moyen (2 à 5) destiné à générer un champ d'interrogation électromagnétique dans au moins une zone de détection et à détecter et signaler la présence d'une étiquette électronique dans la au moins une zone de détection, dans lequel le système comprend en outre un dispositif de détecteur de métaux fixe (7, 9) qui est agencé pour détecter la présence d'un objet métallique (8) dans la au moins une zone de détection, lequel dispositif de détecteur de métaux active un dispositif d'alarme (6) lors de la détection d'un objet métallique.

2. Système de détection de vol électronique selon la revendication 1, **caractérisé en ce que** le dispositif de détecteur de métaux fait un usage au moins partiel du champ d'interrogation électromagnétique engendré par le système de détection de vol.

3. Système de détection de vol électronique selon la revendication 1, **caractérisé en ce que** le dispositif de détecteur de métaux destiné à détecter des objets métalliques dans la au moins une zone de détection fait au moins un usage partiel d'une ou plusieurs antennes (2, 3) du système de détection de vol électronique.

4. Système de détection de vol électronique selon l'une quelconque des revendications précédentes, **caractérisé en ce que** le dispositif de détecteur de métaux fait un usage au moins partiel du moyen (2, 4) destiné à engendrer un champ d'interrogation électromagnétique et/ou du moyen (3, 5) destiné à détecter et à signaler une étiquette électronique.

5. Système de détection de vol électronique selon l'une quelconque des revendications précédentes, **caractérisé en ce que** le dispositif d'alarme fournit une alarme silencieuse, qui ne peut être observée que par les personnes autorisées.

6. Système de détection de vol électronique selon l'une quelconque des revendications précédentes, **caractérisé en ce que** la au moins une zone de détection est limitée sur des côtés opposés par des antennes (2, 3) qui, en fonctionnement, engendrent le champ d'interrogation et reçoivent un signal d'une étiquette électronique.

7. Système de détection de vol électronique selon la revendication 6, **caractérisé en ce que** les antennes sont montées dans un ensemble en forme de colonne sur des côtés opposés de la au moins une zone de détection.

8. Système de détection de vol électronique selon l'une quelconque des revendications 1 à 7, **caractérisé en ce que** le dispositif d'alarme comprend un dispositif d'alarme portable activable sans fil.

9. Procédé destiné à empêcher le vol à l'étalage, dans lequel des marchandises présentes dans un magasin ou un espace similaire sont munies d'étiquettes électroniques qui peuvent être détectées au moyen d'un champ d'interrogation électromagnétique, et dans lequel une entrée/sortie adjacente de l'espace d'au moins une zone de détection est prévue où un champ d'interrogation électromagnétique est engendré, dans lequel un dispositif de détecteur de métaux fixe (7, 9) est également prévu qui est arrangé pour détecter des objets métalliques (8) dans la au moins une zone de détection, et en ce que lors de la détection d'un objet métallique (8) dans la au moins une zone de détection, un signal d'alarme est foumi.

10. Procédé selon la revendication 9, **caractérisé en ce que** le signal d'alarme est un signal d'alarme silencieux, qui peut être observé par une ou plusieurs personnes autorisées.

11. Procédé selon la revendication 9, **caractérisé en ce que** lors de la détection d'un objet métallique dans la au moins une zone de détection et après que le signal d'alarme a été fourni, les personnes franchissant la au moins une zone de détection à cet instant sont suivies et/ou contrôlées.

12. Procédé selon l'une quelconque des revendications 9 à 11, **caractérisé en ce qu'**en vue de la détection des objets métalliques, un usage est fait au moins partiellement du moyen déjà présent en vue de détecter des étiquettes électroniques.

13. Procédé selon l'une quelconque des revendications 9 à 12, **caractérisé en ce que** le signal d'alarme est transmis sans fil à un dispositif d'alarme (10).

14. Procédé selon la revendication 13, **caractérisé en ce que** le dispositif d'alarme comprend au moins un dispositif d'alarme portable.
